# EUROPEAN PATENT SPECIFICATION

(11) **EP 3 125 111 B1**
(45) Date of publication and mention of the grant of the patent: **27.03.2019**
(21) Application number: 15179055.7
(22) Date of filing: 30.07.2015
(51) Int. Cl.: G06F 9/445

(54) **SOFTWARE DEPLOYMENT IN AN AGGREGATED END USER SYSTEM**
SOFTWAREEINSATZ IN EINEM AGGREGIERTEN ENDBENUTZERSYSTEM
DÉPLOIEMENT DE LOGICIEL DANS UN SYSTÈME D'UTILISATEUR FINAL AGRÉGÉ

(43) Date of publication of application: 01.02.2017
(73) Proprietor: Wölk, Conny Konrad, 3045 Meikirch (CH)
(72) Inventor: Wölk, Conny Konrad, 3045 Meikirch (CH)
(74) Representative: Qip Patentanwälte Dr. Kuehn & Partner mbB

(56) References cited:
- EP-A2- 1 431 898
- US-A1- 2011 072 422

## Description

### FIELD OF THE INVENTION

The invention relates to a method, a computer program and a computer-readable medium for generating and/or installing a software package in an aggregated system. Furthermore, the invention relates to a software management system, an aggregated system and a software installation package.

### BACKGROUND OF THE INVENTION

In this application, an aggregated system or aggregated end user system may be any system that is assembled of a plurality of usually communicatively interconnected embedded devices. The embedded devices comprise hardware (such as processors and memory) for executing software, which usually is also stored in the embedded device, for example in a hard disk, a FLASH memory and/or an EPROM. The aggregated system may be a complete device including hardware, electrical parts and/or mechanical parts and the embedded devices may be used for controlling the other parts of the aggregated system and/or themselves. Examples for aggregated systems in this context are in general complex machines and their control, such as cars, ATM machines, etc.

In aggregated end user systems, the operation systems, drivers and application software have to be provided as a complete software system. However, such software systems are usually customized individually. For example, when buying a car, a plurality of different features relating to the hardware and software of the car may be selected by a customer. During manufacturing of the cars, the software features are usually installed independently from each other together with their embedded devices and/or are installed manually in the corresponding embedded device. As a further example, an ATM machine usually has to be customized to a specific bank/country. This is usually done by a service technician, who manually customizes the ATM machine, when it its hardware and mechanical parts are installed.

Furthermore, when embedded devices in an aggregated system are exchanged, usually the needed software is already stored in the embedded device and also exchanged. However, it may be that software in other embedded devices, communicating with the exchanged embedded device, has to be adapted, too. For example, this may be the case, when communication protocols are updated and/or the new embedded device has slightly different features that are used by other embedded devices.

US 2008/0133598 A1, US 2008/0128715 A1 and US 2004/0123286 A1 relate to installing software in a single embedded system. For example, in US 2008/0133598 A1, packages installed in the embedded system are analysed and it is determined, which packages are not used in the embedded system to reduce a memory footprint of the embedded system.

US 2011/072 422 A1 relates to a software update for a medical fluid management device, which may be assembled from individual part components or functional modules. A detection system, which is a part of the fluid management device, stores codes, which may be version numbers or version dates. By comparison of these codes with the program versions on the update storage medium, which may be a CD or DVD, the detection system can determine whether the existing software version has been superseded or not. Furthermore, the suitable software programs for the respective hardware configuration can be determined and loaded.

### DESCRIPTION OF THE INVENTION

It is an objective of the invention to provide a less complex, more secure and more robust installation method for installing and/or modifying the complete software system of an aggregated system. It is a further objective of the present invention to reduce software problems in an aggregated system that are based on the complex configuration possibilities of a plurality of embedded devices.

These objectives are achieved by the subject-matter of the independent claims. Further exemplary embodiments are evident from the dependent claims and the following description.

An aspect of the invention relates to a method for generating a software installation package for an aggregated system, which comprises a plurality of embedded devices. The method may be performed automatically by a software management system, which may be a server and/or database system remote from the aggregated system. The aggregated system may be any type of device and/or machine, which comprises a plurality of embedded devices. The aggregated system additionally may comprise mechanical and/or power electrical parts that are controlled by the embedded devices. For example, an aggregated system may be (or at least may be the control system of) a car, an automated teller machine, a ticket machine, an infotainment system, a production facility, etc.

An embedded device may be a device with a processor adapted for executing software, which may be stored in a non-volatile memory of the device. An embedded device may be characterized that it has to be included into an aggregated system to perform its functionality.

According to an embodiment of the invention, the method comprises: receiving system requirements, generating software configuration data based on rules, and generating the software installation package. In a first step, the software management system may receive information, how a specific aggregated system is configured and which features it should provide (these information may be stored/encoded in system requirements). In a second step, based on rules that may be stored in the software management system, information, which software components are adapted to be run on the aggregated system and which are adapted for providing these features is generated (this information may be stored/encoded in software configuration metadata). In a third step, the software management system then selects the appropriate software components based on the software configuration metadata and packages them into the software installation package, which also may contain information where and/or how the packed software components have to be installed. This software installation package may then be provided as a file to the aggregated system for installation.

According to an embodiment of the invention, the method comprises: receiving system requirements for the aggregated system in a software management system, the system requirements comprising information of the types, versions, configuration and/or interconnection of the embedded devices. The system requirements may comprise hardware configuration data, which may encode how the aggregated system is assembled. For example, the system requirements may encode which type/versions of embedded devices are included in the aggregated system and how they are interconnected (for example the specific bus systems, etc.).

The system requirements may be stored in the software management system. For example, historical system requirements may be used, when the aggregated system has not changed in hardware. It also may be possible that the system requirements are queried by the software management system from the aggregated system, are provided in a file to the software management system and/or that the system requirements are input at least partially by a person.

According to an embodiment of the invention, the method comprises: generating software configuration data from the system requirements based on rules stored in the software management system, the rules describing which software components are installable in an embedded device compatible with the system requirements, and the software configuration data describing, which software components are to be installed in each embedded device. The software configuration data may encode the software configuration of the aggregated system, i.e. it may encode, which software components have to be installed (or are installed) in the specific embedded devices of the aggregated system. The rules, which also may be stored in the software management system, encode, which software component is installable in an embedded device and which features the software component provides. In such a way, system requirements may be mapped to software components.

There may be device specific rules, which only apply to a specific type/version of embedded device. For example, such a rule may encode, which software components provide a specific feature for a specific type/version of embedded device, which software components may be run on a specific type/version of embedded device and/or which other software components are needed for executing a specific software component. There may be combination specific rules, which apply to a combination of devices. For example, a specific feature of an aggregated system may be provided by a combination of software components in different embedded devices. Furthermore, some software components in one embedded device only may be executed, when other specific devices with other specific software components are present in the aggregated system. For example, a component providing a specific communication protocol only may be used in an embedded device, when a communicatively interconnected embedded device is adapted for processing this protocol.

According to an embodiment of the invention, the method comprises: generating the software installation package from software components stored in the system by selecting the software components to be installed in the embedded devices based on the software configuration data and packing these software components together with at least a part of the software configuration data as software installation data. When the software configuration data has been generated from the rules and the system requirements, the software management system may collect the software components to be installed in the aggregated system and may package them in an installation file. These software components, which usually are files and/or which may be stored in the software management system, may be packed in one or more further files, the software installation package, together with information, in which embedded devices the software components have to be installed. This information, which may be seen as software installation data, may be based on the software configuration data.

It has to be understood that a software component may comprise executable data, which may comprise machine code and/or byte code for a virtual machine, such as operating system components, apps, Java © packages, etc. A software component also may comprise information containing data, such as database tables, configuration files, map data for a navigation system, etc. All software components stored in the embedded devices of an aggregated system may be seen as the software system of the aggregated system. The software configuration data may encode the state of the software system.

According to an embodiment of the invention, the system requirements comprise information on features to be provided by the aggregated system. Furthermore, the system requirements, which are used for generating the software configuration data based on the rules, may not only comprise information of the hardware configuration of the aggregated system but also on features, the aggregated system has to provide. Such features may be encoded in feature requirements which also may be part of the system requirements. For example, such feature requirements may be provided to the software management system by a user, which inputs them manually (for example via an online form). However, the features also may be provided in the form of a file.

It has to be understood that the software management system may comprise rules that check, whether the feature requirements are compatible with the hardware configuration data. For example, for providing specific features, the aggregated system may need specific types and/or versions of embedded devices.

According to an embodiment of the invention, a history for the system requirements and/or the software configuration data is stored in the software management system. For example, every time the software management system generates a software installation package for a specific aggregated system, the software management system may save/store the collected system requirements and/or the generated software configuration data in a history of the aggregated system. From this history it may be seen, which embedded devices have been added, removed and/or exchanged, as well as which software components have been added, removed and/or exchanged in the embedded devices of the specific aggregated system.

According to an embodiment of the invention, the system requirements are determined by applying changes of the aggregated system to historical system requirements. For example, when it is known that only the feature requirements have changed but not the hardware configuration, then the software management system may take the last hardware configuration data as actual hardware configuration data. Also, when only an embedded device has been replaced (for example, because it was faulty) with a newer version, the other hardware configuration data and the feature requirements may be taken from the last system requirements.

According to an embodiment of the invention, the system requirements are based on querying the aggregated system for changes in its hardware configuration. It may be possible that the aggregated system is adapted for providing information about the current hardware configuration online or offline. For example, the software management system may query this data online via an Internet connection. It also may be possible that this data is read out with a special device from the aggregated system (such as a diagnostics device), saved into a file, which is then provided to the software management system.

According to an embodiment of the invention, the method further comprises: determining which software components have to be updated by comparing the software configuration data, with a historical software configuration data; including only software components in the software installation package that have to be updated. It may be possible that the software management system determines, which software components encoded in the software configuration data are already installed in the aggregated system. For example, this may be done based on historical data. In this case, it is possible that only software components to be updated, i.e. which are either new or have to be replaced, are contained in the software installation package.

However, the software system of the aggregated system also may be completely exchanged during an update, i.e. the software installation package may contain the complete software system of the aggregated system.

It also may be possible that a software installation package is generated, when a software component changes, for example, when an error in a software component has been removed or when a newer version of the software component is present. In this case, the system requirements and the rules may stay the same, but the software installation package based in these data will change. In such a way, the software system of an aggregated system may be automatically updated, when a software component has been fixed.

According to an embodiment of the invention, the software installation package and/or software components contained therein and/or the software configuration data contained therein are compressed and or encrypted. This may decrease the memory footprint of the software installation package, may decrease network traffic and/or may increase the security of the installation process.

According to an embodiment of the invention, the method further comprises: providing the software installation package for download by the aggregated system. It may be possible that the aggregated system and the software management system are interconnected by a communication network, such as the Internet. In this case, the aggregated system automatically may report a change in hardware (such as a repair) or a new feature request (such as a demand by a user input at the aggregated system) to the software management system, which then sends the aggregated system a software installation package with software changes caused by the hardware change and the new feature.

According to an embodiment of the invention, the method further comprises: providing the software installation package on a non-volatile memory to be connected with the aggregated system. It also may be possible that the software installation package is saved into a memory stick or a special installation device and that this non-volatile memory is transported in hardware to the site of the aggregated system. For example, a service technician may generate the software installation package in his office, may copy it to its laptop or another mobile device and may install then the software installation package with this device at the site of the aggregated system.

A further aspect of the invention relates to a method for installing a software installation package in an aggregated system. This method may be performed automatically by the aggregated system itself, for example by a specific master embedded device, which is adapted for updating software of other subordinated embedded devices. The method also may be performed automatically by an external installation device, which is communicatively connected with the aggregated system, such as a diagnostics device or the laptop/mobile device of a service technician.

According to an embodiment of the invention, the method further comprises: receiving the software installation package; extracting software components from the software installation package; extracting software configuration data from the software installation package; and installing the software components in at least two embedded devices of the aggregated system based on the information in the software configuration data. Since the software installation package not only contains software components but also software configuration data, which encodes, which software components are contained in the package and/or in which embedded devices these software components should be installed, the installation process may be automated. A specific software may extract the software components and the software configuration data from the software installation package and may install the software components in different embedded devices based on the information encoded in the software configuration data.

According to an embodiment of the invention, the software installation package is received in an external installation device communicatively interconnected with all embedded devices of the aggregated system, the installation device extracts the software components and the configuration data and installs the software components in the embedded devices. As already mentioned, this may be performed by a special software tool installed in a laptop or mobile device of a service technician.

According to an embodiment of the invention, the software installation package is received in a master embedded device being part of the aggregated system and communicatively interconnected with all embedded devices of the aggregated system, the master embedded device extracts the software components and the configuration data and installs the software components in the embedded devices. In such a way, the aggregated system may automatically update itself. It also may be the case that the software installation package is file executable in the master embedded device and also contains the software needed for processing the contents of the software installation package.

A further aspect of the invention relates to a computer program for generating a software installation package for an aggregated system, which, when being executed by a processor, is adapted to carry out the steps of the method for generating a software installation package as described in the above and in the below. A further aspect of the invention relates to a computer-readable medium, in which such a computer program is stored. For example, such a computer program may be stored in a software management system and/or may be executed by the software management system.

A computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a non-transitory or transitory medium.

A further aspect of the invention relates to a computer program for installing a software installation package for an aggregated system, which, when being executed by a processor, is adapted to carry out the steps of the method for installing a software installation package as described in the above and in the below. A further aspect of the invention relates to a computer-readable medium, in which such a computer program is stored. For example, such a computer program may be stored in the aggregated system, a master embedded device of an aggregated system and/or in an external installation device. Such a computer program also may be executed by the aggregated system, the master embedded device of an aggregated system and/or the external installation device.

A further aspect of the invention relates to a software management system. The software management system may be a server and/or database system. The software management system may run and/or may be one or more hardware servers and/or one or more virtual machines. The software management system may be provided by a cloud computing facility.

The software management system may be interconnected via an Internet connection with a plurality of aggregated systems. The software management system may be adapted for managing the software of a plurality of aggregated systems of the same type, for example, the cars manufactured by one OEM.

According to an embodiment of the invention, the software management system is adapted for performing the method for generating the software installation package. For example, the software management system may store a computer program, which, when being executed, performs the method.

According to an embodiment of the invention, the software management system comprises and/or stores software components and rules. The software components may be installed in different embedded devices to be installed in an aggregated system, wherein the software components are indexed based on a device type, a device version and/or features provided by an embedded device. The rules interrelate software components with system requirements of an aggregated system, wherein the system requirements comprise information of the types, versions, configuration and/or interconnection of the embedded devices of the specific aggregated system, and the rules describe which software components are installable in an embedded device compatible with the system requirements. As mentioned above, the software management system additionally may store historical data of system requirements and software configuration data.

A further aspect of the invention relates to an aggregated system, which is adapted for installing a software installation package itself. For example, the aggregated system stores software, which, when being executed, is adapted for performing the method for installing the software package.

According to an embodiment of the invention, the aggregated system comprises: a plurality of embedded devices; a master embedded device communicatively interconnected with each embedded device of the plurality of embedded devices; wherein the master embedded device is adapted for receiving the software installation package and for installing the software components in the different embedded devices. As already described, the master embedded device may receive the software installation package and may install it automatically in the subordinated embedded devices interconnected with the master embedded device.

According to an embodiment of the invention, the aggregated system furthermore comprises mechanical and/or power electronics parts controlled by the embedded devices. It has to be noted that the aggregated system not only may be a control system and/or information processing system but also may be a device/machine/facility for performing task influencing the physical world. For example, the embedded devices may control the drive, valves and/or other machinery of a car.

A further aspect of the invention relates to a software installation package, which may be generated by the software managing system as described in the above and in the below and/or which may be used in the installation method as described in the above and in the below. For example, the software installation package may be a file that may be saved in a file system.

According to an embodiment of the invention, the software installation package comprises software components to be installed in different embedded devices of an aggregated system; and software installation data describing, which software components are to be installed in which embedded device of the aggregated system. In other words, the software installation package comprises the software components to be installed in different embedded devices (i.e. at least two embedded devices of one aggregated system) and data/information, where the software components have to be installed (i.e. information relating to at least two embedded devices).

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 schematically shows an aggregated system and a software management system according to an embodiment of the invention.
Fig. 2 shows a flow diagram for a method for generating a software installation package according to an embodiment of the invention.
Fig. 3 shows a flow diagram for a method for installing a software installation package according to an embodiment of the invention.
Fig. 4 schematically shows a software installation package according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

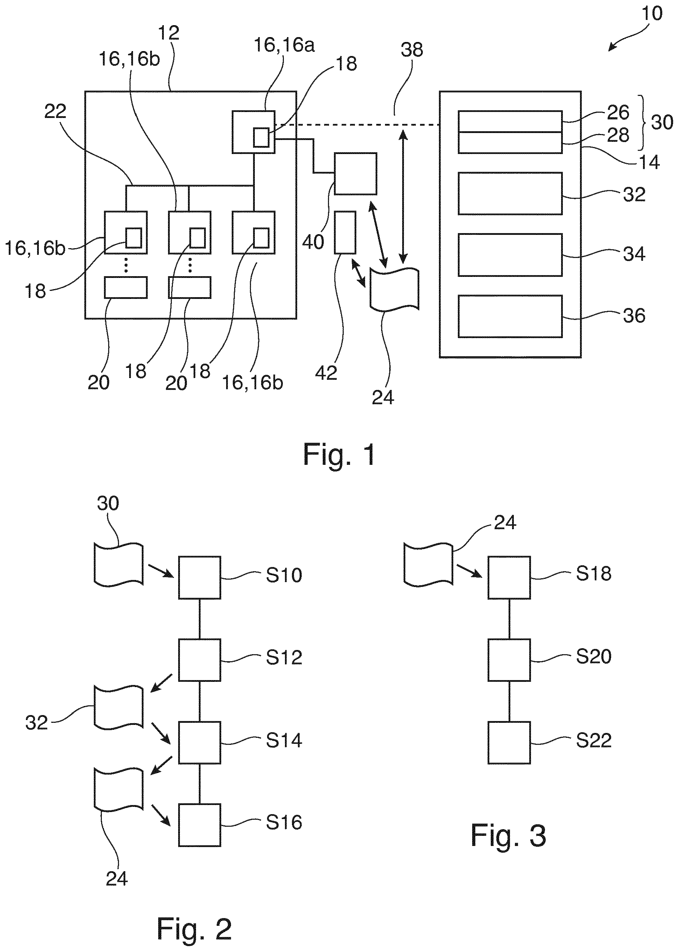

Fig. 1 shows a system 10 comprising an aggregated system 12 and a software management system 14. For example, the aggregated system 12 may be a car, a machine, a facility, an infotainment system, a vending machine, an automated teller machine, a ticket machine. The aggregated system 12 also may be a control device system of such a device or at least a part of such a control device system.

The aggregated system 12 comprises embedded devices 16, wherein each embedded device is adapted for executing software 18. The embedded devices 16 may comprise controllers for controlling mechanical and/or power electric parts 20 of the aggregated system 12. The mechanical and/or power electric parts 20 may be sensors and/or actuators of the aggregated system 12. For example, in the case of a car, the parts 20 may comprise a drive, a throttle valve, an automatic window, etc. Also an on-board computer of the aggregated system 10 (such as an on-board computer of a car) may be an embedded device 16. Furthermore, bus systems and/or communication devices may be embedded devices 16.

Each embedded device 16 is adapted for executing software 18 and comprises one or more processor, non-volatile and volatile memory. The respective software may be stored in the respective embedded device in a non-volatile memory, such as an EPROM, FLASH, hard disc, etc. For example, the software 18 of one embedded device 16 may comprise an operating system for the embedded device 16 and further applications using the operation system to perform tasks of the embedded device 16. Such tasks may be the control of one or more mechanical and/or power electric parts 20, communication with other embedded devices 16 and/or a user interaction with a person using/operating the aggregated system 12.

Furthermore, each embedded device 16 may be adapted for being updated. During update, at least a part of the software 18 stored in the non-volatile memory of the embedded device is replaced by another software. In particular, as described above and below, the software management system14 is responsible for providing the software 18 that is used during such an update.

The embedded devices 16 of the aggregated system 12 may be communicatively interconnected via one or more internal communication systems 22, for example via a bus system.

The embedded devices 16 may comprise a master embedded device 16a, which is adapted for updating other subordinated embedded devices 16b. For example, the master embedded device 16a may send the software 18 to be updated via the internal communication system 22 to a subordinated embedded device 16b, where it is stored in the respective non-volatile memory.

The software management system 14 is adapted for generating a software installation package 24 for the aggregated system 12, which software installation package 24 may be used for updating the software 18 of the embedded devices 16 of the aggregated system 12. The software management system 14 may be a server implemented in hardware, it may comprise a plurality of such servers, and/or may be provided as a cloud computing facility. The software management system 14 may comprise a database to store at least a part of the data mentioned above and below. However, this data also may be stored in files in a file system.

It has to be understood that the software management system 14 is adapted to generate software installation package 24 not only for one aggregated system 12 but for a plurality of similar aggregated systems 12 of the same type. For example, aggregated systems 12 of the same type may be the cars or at least a car series of a specific manufacturer. They also may be the ATM machines of a specific bank, etc.

The software management system 14 may store (possibly historical) hardware configuration data 26 and/or (possibly historical) feature requirements data 28 of the plurality of aggregated systems 12.

The hardware configuration data 26 may comprise a list of all aggregated systems 12 to be updated by the software management system. For each individual aggregated system 12 in the list, the hardware configuration data 26 furthermore may comprise information on the hardware configuration of the aggregated system 12, such as the type and/or version of embedded devices 16 used in the aggregated system 12 and/or the interconnection of the embedded devices 16 in the aggregated system 12.

The feature requirements data 28 may comprise information on features provided by the specific embedded devices 16. The same embedded device 16 (same type, same version, etc.) may be configured differently to perform different tasks.

For example, two embedded devices 16 identical in hardware may be employed in one aggregated system for different tasks, such as controlling two different parts 20. In this case, the requirements to the software 18 in the two embedded devices 16 are different and different software 18 has to be installed in the two embedded devices 16. The feature requirements for the first embedded device 16 may relate to the control of a first mechanical part and the feature requirements for the second embedded device 16 may relate to the control of a second mechanical part.

As a second example, an embedded device 16 may provide different features to a user. For example, a navigation device may comprise maps of specific countries, which may be selected by a driver of a car. Furthermore, a car may have different types of software for different motor tuning. In this context, it has to be understood that a specific feature requirement may map to more than one embedded device 16.

Additionally, an actual hardware configuration (at least partially) and/or actual feature requirements may be queried by the software management system 14 from the specific aggregated system 12, for example via an Internet connection 38.

The hardware configuration data 26 also may be seen as a form of requirements to the software 18, i.e. specific hardware devices can only process specific software. In such a way, the hardware configuration data 26 and the feature requirements data 28 together may be seen as system requirements data 30, which stores system requirements for each aggregated system 12 and/or system requirements for the aggregated system 12.

The software management system 14 additionally may store (possibly historical) software configuration data 32. For each individual aggregated system 12 in the list of aggregated systems 12 updated by the software management system 14, which list was mentioned above, the software configuration data 32 may comprise information on the software configuration of the aggregated system 12. For example, a software configuration may contain information about which software components are installed in the embedded devices 16 and/or how these software components are configured. Additionally, an actual software configuration (at least partially) may be queried by the software management system 14 from the specific aggregated system 12, for example via the Internet connection 38.

It may be possible that the software management system 14 stores a history of the hardware configuration data 26, the feature requirements data 28, the system requirements data 30 and/or the software configuration data 32. For example, every time the configuration of the aggregated system 12 changes in hardware and/or in software, the software management system 14 may store a new copy of the actual configuration data for the specific aggregated system 12.

The hardware configuration data 26, the feature requirements data 28, the system requirements 30 and/or the software configuration data 32 may be stored in the form of XML-files, plain text files and/or in a relational database. For example, the data 26, 28, 30 32 for a specific aggregated system 12 may be indexed with an identifier of a specific aggregated system 12 (such as an individual machine/car).

Furthermore, the software management system 14 stores software components 34 for individual embedded devices 16. It has to be understood that for every possible type of embedded device 16, which may be installed in an aggregated system 10 managed by the software managing system 14, software components 34 for every possible version of embedded device and/or possible feature for the embedded device 16 may be stored.

The software components 34 may be stored in the form of files and/or in a relational database. The software components 34 may be indexed by identifiers for embedded devices 16 (such as a version and/or type of device) and for features provided by the embedded device 16.

For example, a software component 34 may be a part/component of an operating system (such as Linux ©), a software driver for accessing specific hardware, a software library implementing specific features; a virtual machine, a software package running on specific virtual machines, etc. Software components 34 may comprise executable code, such as machine code and/or byte code. Software components 34 also may comprise non-executable data, such as images, map data, configuration data, etc.

During generation of the software installation package 24, the software management system 14 selects some of the software components 32 based on system requirements 30 and/or software configuration data 32 and packages them into the software installation package 24. When the software installation package 24 is installed in the aggregated system 12, the software components 34 in the software installation package 24 are copied into the memory of the specific embedded devices 16. Thus, the software 18 in the embedded devices comprises software components 32 from the software management system 14.

For automatically generating the software installation package 24, the software management system 14 stores rules 36, how software components 32 for specific combination of (type, version of) embedded devices 16 and features have to be selected and/or assembled to correspond to the system requirements 30. The rules 32 may be stored in the form of XML-files, plain text files and/or in a relational database.

The rules 36 may comprise device specific rules. Such rules 36 may encode, which software components 34 may be installed in which type and/or version of embedded device 16 and/or which software components 34 may provide a specific feature for an embedded device 16. Such rules 36 also may encode how software components 32 of one type/version of device may depend on each other. For example, a specific application as software component 34 may need specific parts of an operation system, which also may be provided as software components 34.

Furthermore, the rules 36 may comprise combination dependent rules, which depend on a combination of types/versions of embedded devices 16. Such rules 36 may encode, which software components 32 only may be installed in specific combinations of embedded devices 16. For example, in two embedded devices 16 interconnected by a communication bus, only communication software adapted for communication via this bus may be installed. Furthermore, specific features only may be provided by a combination of software components 34. For example, a motor tuning feature providing a software-based motor tuning may demand software components 34, which have to be installed in several embedded devices 16.

During generation of a software installation package 24 for a specific aggregated system 12, the software management system 14 generates software configuration data 32 by applying the rules 36 on system requirements 30 of the specific aggregated system 12. The system requirements 32 encode, what the aggregated system 12 is able to do and what it should do. The rules encode, how these demands can be implemented by using specific software components 34. In such a way, the system requirements 30 for a specific aggregated system 12 are mapped to software configuration data 32 for the specific aggregated system 12. The software configuration data 32 for the specific aggregated system 12 encodes a software configuration, which is adapted for providing the demanded features based on the hardware configuration of the specific aggregated system 12. In the end, the software installation package 24 for the specific aggregated system 12 is assembled by packaging the software components 32 into the software installation package 24, which are encoded in the software configuration data 32.

Fig. 1 furthermore shows, how the software installation package 24 may be provided to the aggregated system 12. For example, the software installation package 24 may be sent via a communication line 38 to the aggregated system 12, for example the software installation package 24 may be provided as Internet download for the aggregated system 12.

It also may be possible that the software installation package 24 is copied into an external installation device 40. Also, the external installation device 40 may download the software installation package 24 via Internet.

As a further example, the software installation package 24 may be copied in an external non-volatile memory 42, such as a memory stick, which is then plugged into the aggregated system 12 for installation. For example, the external non-volatile memory 42 may be plugged in a master embedded device 16a over which the software components 32 in the software installation package 24 are then copied into the different embedded devices 16.

Fig. 2 shows a flow diagram for a method for generating a software installation package that may be performed by the software managing system 14.

In step S10, the software management system 14 receives system requirements 30. These system requirements 30 may comprise hardware configuration data 26 and/or feature requirements data 28. The system requirements 30 may be based on historical system requirements 28 already stored in the software management system 14 and/or further data received from the aggregated system 12 and/or encoded in further files.

For example, an embedded device 16 has been exchanged with a newer version and the aggregated system 12 has to be updated. In this case, the hardware configuration data 26 to be used during the method may have to be modified with respect to a historical version, but the feature requirements metadata may stay the same.

As a further example, a software component 32 has been updated (due to errors, improvements, new legal requirements, etc.). In this case, the system requirements 30 may be the last stored historical version.

It also may be possible that the hardware of the aggregated system has not changed, but that there are new customer requirements (i.e. new features to be installed). In this case, the hardware configuration data 26 used during the method may be based completely on a historical version, but the feature requirements metadata to be used during the method may have to be modified with respect to a historical version.

In step S12, the software management system 14 generates software configuration data 32 specific for the aggregated system 12 and the received system requirements 30. The rules 36 are used to determine, which software components 34 provide the required features and which are adapted for being executed on the hardware of the aggregated system 12. There may be also rules encoding preferences for selecting software components 34, when there are several possibilities to match the software components 34 against the system requirements 30. For example, there may be a rule that always the software component 34 with the highest version is used.

When there are conflicts and/or the software management system 14 is not able to determine the software configuration data 32 completely automatically, the software configuration data 32 may be complemented/amended manually, for example by a user providing the missing information online.

In step S14, the software installation package 24 is generated by the software management system 14. Based on the software configuration data 32, the software management system 14 selects the software components 32 to be installed and stores them in a software installation package 24 (which for example may be a file). Furthermore, the software management system 14 may include software installation data into the software installation package 24. The software installation data may be based on the software configuration data 32 and may encode, which embedded devices have to be updated, which software components 34 are contained in the software installation package 24 and/or which software components 34 have to be updated in which embedded device 16.

It may be possible that only software components 34 are selected that have to be exchanged or that the software installation package 24 contains all software components 34 encoded in the software configuration data 32.

In step S14, the software installation package 24 or at least parts of it may be compressed and/or encrypted.

In step S16, the software installation package 24 is provided to the aggregated system 12. For example, software installation package 24 may be stored in a non-volatile memory 42, like an SD card, memory stick, etc. and then be copied into the aggregated system 12, a master embedded device 16a of the aggregated system 12 or an external installation device 40. The software installation package 24 also may be provided for download, for example via Internet 38 and/or a wireless communication connection.

Fig. 3 shows a method for installing the software installation package 24, which for example may be performed by the master embedded device 16a or the external installation device 40.

In step S18, the software installation package 24 is received. For example, the software installation package 24 is one or more files, which are loaded into a memory of the respective device 16a, 40.

In step S20, the software installation data and the software components 34 are extracted from the software installation package 24. For example, the software installation data may be parsed and a data structure encoding, which software component 32 has to be installed in which embedded device 16 may be generated. Furthermore, each software component 32 may be stored in a separate file in the file system of the respective device 16a, 40.

In step S20, the respective device 16a, 40 also may decrypt and/or decompress the software installation package 24 or at least the parts, which are encrypted and/or compressed.

In step S22, the software components 32 are installed in the embedded devices 32 of the aggregated system 10. Based on the software installation data, the software components 34 to be installed in a specific embedded device 16 are determined and then stored in the memory of the specific embedded device 16. Components not any more needed may be deleted from the specific embedded device 16.

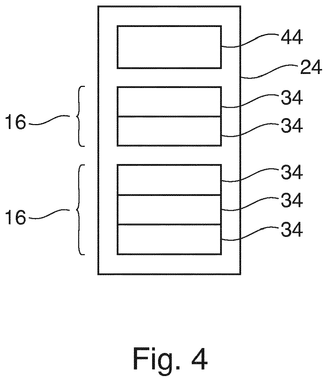

Fig. 4 shows an example of a software installation package 24. The software installation package 24 may be contained in one or more files.

The software installation package 24 contains software installation data 44, which may encode, for which specific aggregated system 12 the software installation package 24 is intended for, which software components 34 are contained in the software installation package 24 and/or which software components 34 are to be installed and/or replaced in which embedded device 16. The software installation data 44 may comprise or at least may be based on a part of the software configuration data 32.

Furthermore, the software installation data 44 may encode, which software component 34 of a specific embedded device 16 may be deleted.

Furthermore, the software installation package 24 may contain software components 34. For example, the software components 34 for each embedded device to be updated may be grouped together and/or may be stored in software packages for each embedded device 16. It also may be possible that the software installation package 24 comprises a file structure storing the individual software components 16.

In the following, some examples are provided, in which the methods, the software management system 14, the aggregated system 12 and the software installation package 24 may be used.

For example, there are aggregated end user systems 12, which may be customized by a customer before ordering. A standard example for such an aggregated system 12 is a car. The customizing may be done online, via an application (browser, app), in which the specific features of the car (entertainment system, navigation system, etc.) may be input via masks. Based on the customizing data, the system requirements 30 may be generated. In the factory, after the car has been assembled, a complete software update package for the individual car may be generated and deployed in the car. This may be performed independently from the hardware delivered by several component suppliers to the factory.

The aggregated end user system 12 also may be provided with new software features after the delivery to the customer. For example, the customer wishes a new feature (such as a special motor chip tuning or new electronic cards for a navigation system). This new feature requirement may be input via a user interface of an on-board computer of the aggregated system 12. A software package providing this feature may be generated at the software management system 12 and deployed, for example, via a wireless communication interface of the aggregated system 12. The new feature may be timely restricted. After the booking time of the feature, the feature may be deinstalled in the same way. For example, when the booking time is up, the standard motor tuning may be installed via a further wireless update.

Usually, when an aggregated system has to be repaired, one or more embedded devices 16 have to be exchanged. Here, it may be the case, that new embedded devices 16 of the same type but a different version are installed. For example, during inspection of a car, a part not working properly is exchanged with a newer version of this part. The newer part also may have a newer version of its controller. This makes it possible that a faster type of network protocol for communication with this controller may be used. In the generated software installation package 24, not only the new software components 34 for the exchanged part may be provided, but also software components 34 for communication with the exchanged controller, which may be installed in other embedded devices, are provided.

A further example may be provided by an automated teller machine, which has to be customized. In a meeting, specific features of the ATM machine are fixed and manually assembled into a feature requirements file. This file is input into the software management system 14, which may lexically analyse it in view of correctness. From the file, the software management system 14 generates software configuration data 32 based on the rules and hardware configuration already present in the software management system 14. Based on this, a software installation package 24 is generated and stored in an SD card. The SD card is put into the automated teller machine and the software installation package is automatically installed by an installation software already present in the automated teller machine.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: system
- 12: aggregated system
- 14: software management system
- 16: embedded device
- 16a: master embedded device
- 16b: subordinated embedded device
- 18: software
- 20: mechanical and/or power electric part
- 22: internal communication system
- 24: software installation package
- 26: hardware configuration data
- 28: feature requirements data
- 30: system requirements data
- 32: software configuration data
- 34: software components
- 36: rules
- 38: Internet connection
- 40: external installation device
- 42: external non-volatile memory
- 44: software installation metadata

## Claims

1. A method for generating and installing a software installation package (24) for an aggregated system (12), which comprises a plurality of embedded devices (16),
wherein a software management system (14) generates the software installation package (24) by:
receiving system requirements (30) for the aggregated system in the software management system (14), the system requirements (30) comprising information of the types, versions, configuration and/or interconnection of the embedded devices (16);
generating software configuration data (32) from the system requirements (30) based on rules (36) stored in the software management system (14), the rules (36) describing which software components (34) are installable in an embedded device (16) compatible with the system requirements (30), and the software configuration data (32) describing, which software components (34) are to be installed in each embedded device (16), wherein the rules (34) comprise combination dependent rules, which depend on a combination of types and/or versions of embedded devices (16), wherein the combination dependent rules encode, which software components (34) only are to be installed in specific combinations of embedded devices (16);
determining which software components (34) have to be updated by comparing the software configuration data (32) with a historical software configuration data (32), which describes, which software components (34) have been added, removed and/or exchanged in the embedded devices (16) of the aggregated system (12);
generating the software installation package (24) from software components (34) stored in the software management system (14) by selecting the software components (34) to be installed in the embedded devices (16) based on the software configuration data (32) and packing these software components (34) together with at least a part of the software configuration data (32) as software installation data (44), wherein only software components (34) are included in the software installation package (24) that have to be updated;
wherein the aggregated system (12), installs the software installation package (24) by:
receiving the software installation package (24);
extracting software components (34) from the software installation package (24);
extracting software installation data (44) from the software installation package (24);
installing the software components (34) in at least two embedded devices (16) of the aggregated system (12) based on the information in the software installation data (44).

2. The method of claim 1,
wherein the system requirements (30) comprise information on features to be provided by the aggregated system (12).

3. The method of claim 1 or 2,
wherein a history for the system requirements (30) and/or the software configuration data (32) is stored in the software management system; and/or
wherein the system requirements (30) are determined by applying changes of the aggregated system (12) to historical system requirements (30).

4. The method of one of the preceding claims,
wherein the system requirements (30) are based on querying the aggregated system (12) for changes in its hardware configuration.

5. The method of one of the preceding claims,
wherein the software installation package (24) and/or software components (34) contained therein and/or the software installation data (44) contained therein are compressed and or encrypted.

6. The method of one of the preceding claims, further comprising:
providing the software installation package (24) for download by the aggregated system (12); and/or
providing the software installation package (24) on a non-volatile memory (40, 42) to be connected with the aggregated system (12).

7. The method of one of the previous claims,
wherein the software installation package (24) is received in an external installation device (40) communicatively interconnected with all embedded devices (16) of the aggregated system (12), wherein the installation device (40) extracts the software components (34) and the software installation data (44) and installs the software components (34) in the embedded devices (16); or
wherein the software installation package (24) is received in a master embedded device (16a) being part of the aggregated system (12) and communicatively interconnected with all embedded devices (16) of the aggregated system (12), wherein the master embedded device (16a) extracts the software components (34) and the software installation data (44) and installs the software components (34) in the embedded devices (16).

8. A computer program for generating and installing a software installation package (24) for an aggregated system (12), which, when being executed by a processor, is adapted to carry out the steps of the method of one of the previous claims.

9. A computer-readable medium, in which a computer program according to claim 8 is stored.

10. A system (10) comprising a software management system (14) and an aggregated system (12),
wherein the software management system (14) stores:
software components (34) to be installed in different embedded devices (16) to be installed in the aggregated system (12), wherein the software components (34) are indexed based on a device type, a device version and/or features provided by an embedded device;
rules (36) interrelating software components (34) with system requirements (30) of an aggregated system (12), wherein the system requirements (30) comprise information of the types, versions, configuration and/or interconnection of the embedded devices (16) of a specific aggregated system (12), and the rules (36) describe which software components (34) are installable in an embedded device (16) compatible with the system requirements (30);
wherein the system (10) is adapted for performing the method of one of claims 1 to 7.

11. The system of claim 10,
wherein the aggregated system (12), comprises:
a plurality of embedded devices (16);
a master embedded device (16a) communicatively interconnected with each embedded device (16) of the plurality of embedded devices;
wherein the master embedded device (16a) is adapted for receiving the software installation package (24) and for installing software components (34) in the software installation package (24) in the different embedded devices (16).

12. The aggregated system of claim 11,
wherein the aggregated system (12) furthermore comprises mechanical and/or power electronics parts controlled by the embedded devices (16).

## Patentansprüche

1. Verfahren zum Generieren und Installieren eines Software-Installationspaketes (24) für ein aggregiertes System (12), das mehrere eingebettete Vorrichtungen (16) umfasst,
wobei ein Softwaremanagementsystem (14) das Software-Installationspaket (24) generiert durch:
Empfangen von Systemanforderungen (30) für das aggregierte System in dem Softwaremanagementsystem (14), wobei die Systemanforderungen (30) Informationen über die Arten, Versionen, Konfiguration und/oder Verbindung zwischen den eingebetteten Vorrichtungen (16) umfassen;
Generieren von Softwarekonfigurationsdaten (32) aus den Systemanforderungen (30) auf der Basis von in dem Softwaremanagementsystem (14) gespeicherten Regeln (36), wobei die Regeln (36) beschreiben, welche Software-Komponenten (34) in einer eingebetteten Vorrichtung (16) installiert werden können, die mit den Systemanforderungen (30) kompatibel sind, und die Softwarekonfigurationsdaten (32) beschreiben, welche Software-Komponenten (34) in jeder eingebetteten Vorrichtung (16) zu installieren sind, wobei die Regeln (34) kombinationsabhängige Regeln umfassen, die von einer Kombination von Arten und/oder Versionen von eingebetteten Vorrichtungen (16) abhängig sind, wobei die kombinationsabhängigen Regeln codieren, welche Software-Komponenten (34) nur in bestimmten Kombinationen eingebetteter Vorrichtungen (16) zu installieren sind;
Bestimmen, welche Software-Komponenten (34) aktualisiert werden müssen, durch Vergleichen der Softwarekonfigurationsdaten (32) mit historischen Softwarekonfigurationsdaten (32), was beschreibt, welche Software-Komponenten (34) in den eingebetteten Vorrichtungen (16) des aggregierten Systems (12) hinzugefügt, entfernt und/oder ausgetauscht wurden;
Generieren des Software-Installationspaketes (24) aus in dem Softwaremanagementsystem (14) gespeicherten Software-Komponenten (34) durch Auswählen der in den eingebetteten Vorrichtungen (16) zu installierenden Software-Komponenten (34) auf der Basis der Softwarekonfigurationsdaten (32) und Packen dieser Software-Komponenten (34) zusammen mit mindestens einem Teil der Softwarekonfigurationsdaten (32) als Software-Installationsdaten (44), wobei nur Software-Komponenten (34) in dem Software-Installationspaket (24) enthalten sind, die aktualisiert werden müssen;
wobei das aggregierte System (12) das Software-Installationspaket (24) installiert durch:
Empfangen des Software-Installationspaketes (24); Extrahieren von Software-Komponenten (34) aus dem Software-Installationspaket (24);
Extrahieren von Software-Installationsdaten (44) aus dem Software-Installationspaket (24);
Installieren der Software-Komponenten (34) in mindestens zwei eingebetteten Vorrichtungen (16) des aggregierten Systems (12) auf der Basis der Informationen in den Software-Installationsdaten (44).

2. Verfahren nach Anspruch 1,
wobei die Systemanforderungen (30) Informationen über Merkmale umfassen, die durch das aggregierte System (12) bereitzustellen sind.

3. Verfahren nach Anspruch 1 oder 2,
wobei eine Historie für die Systemanforderungen (30) und/oder die Softwarekonfigurationsdaten (32) in dem Softwaremanagementsystem gespeichert wird; und/oder wobei die Systemanforderungen (30) bestimmt werden, indem Änderungen des aggregierten Systems (12) auf historische Systemanforderungen (30) angewendet werden.

4. Verfahren nach einem der vorangehenden Ansprüche,
wobei die Systemanforderungen (30) auf dem Abfragen des aggregierten Systems (12) nach Änderungen in seiner Hardware-Konfiguration basieren.

5. Verfahren nach einem der vorangehenden Ansprüche,
wobei das Software-Installationspaket (24) und/oder die darin enthalten Software-Komponenten (34) und/oder die darin enthalten Software-Installationsdaten (44) komprimiert und oder verschlüsselt werden.

6. Verfahren nach einem der vorangehenden Ansprüche, das des Weiteren Folgendes umfasst:
Bereitstellen des Software-Installationspaketes (24) zum Download durch das aggregierte System (12); und/oder Bereitstellen des Software-Installationspaketes (24) in einem nicht-flüchtigen Speicher (40, 42), der mit dem aggregierten System (12) zu verbinden ist.

7. Verfahren nach einem der vorangehenden Ansprüche,
wobei das Software-Installationspaket (24) in einer externen Installationsvorrichtung (40) empfangen wird, die kommunikativ mit allen eingebetteten Vorrichtungen (16) des aggregierten Systems (12) verbunden ist, wobei die Installationsvorrichtung (40) die Software-Komponenten (34) und die Software-Installationsdaten (44) extrahiert und die Software-Komponenten (34) in den eingebetteten Vorrichtungen (16) installiert; oder
wobei das Software-Installationspaket (24) in einer eingebetteten Master-Vorrichtung (16a) empfangen wird, die ein Teil des aggregierten Systems (12) ist und kommunikativ mit allen eingebetteten Vorrichtungen (16) des aggregierten Systems (12) verbunden ist, wobei die eingebettete Master-Vorrichtung (16a) die Software-Komponenten (34) und die Software-Installationsdaten (44) extrahiert und die Software-Komponenten (34) in den eingebetteten Vorrichtungen (16) installiert.

8. Computerprogramm zum Generieren und Installieren eines Software-Installationspaketes (24) für ein aggregiertes System (12), das, wenn es durch einen Prozessor ausgeführt wird, dafür ausgelegt ist, die Schritte des Verfahrens nach einem der vorangehenden Ansprüche auszuführen.

9. Computerlesbares Medium, auf dem ein Computerprogramm nach Anspruch 8 gespeichert wird.

10. System (10), das ein Softwaremanagementsystem (14) und ein aggregiertes System (12) umfasst,
wobei das Softwaremanagementsystem (14) Folgendes speichert: Software-Komponenten (34), die in verschiedenen eingebetteten Vorrichtungen (16) zu installieren sind, die in dem aggregierten System (12) zu installieren sind, wobei die Software-Komponenten (34) auf der Basis eines Vorrichtungstyps, einer Vorrichtungsversion und/oder von Merkmalen, die durch eine eingebettete Vorrichtung bereitgestellt werden, indexiert werden;
Regeln (36), die Software-Komponenten (34) mit Systemanforderungen (30) eines aggregierten Systems (12) in gegenseitige Beziehung setzen, wobei die Systemanforderungen (30) Informationen über die Arten, Versionen, Konfiguration und/oder Verbindung der eingebetteten Vorrichtungen (16) eines speziellen aggregierten Systems (12) umfassen, und die Regeln (36) beschreiben, welche Software-Komponenten (34) in einer eingebetteten Vorrichtung (16) installiert werden können, die mit den Systemanforderungen (30) kompatibel ist; wobei das System (10) dafür ausgelegt ist, das Verfahren nach einem der Ansprüche 1 bis 7 auszuführen.

11. System nach Anspruch 10, wobei das aggregierte System (12) Folgendes umfasst:
mehrere eingebettete Vorrichtungen (16);
eine eingebettete Master-Vorrichtung (16a), die kommunikativ mit jeder eingebetteten Vorrichtung (16) der mehreren eingebetteten Vorrichtungen verbunden ist;
wobei die eingebettete Master-Vorrichtung (16a) dafür ausgelegt ist, das Software-Installationspaket (24) zu empfangen und Software-Komponenten (34) in dem Software-Installationspaket (24) in den verschiedenen eingebetteten Vorrichtungen (16) zu installieren.

12. Aggregiertes System nach Anspruch 11,
wobei das aggregierte System (12) des Weiteren mechanische und/oder leistungselektronische Teile umfasst, die durch die eingebetteten Vorrichtungen (16) gesteuert werden.

## Revendications

1. Procédé de génération et d'installation d'un package d'installation de logiciel (24) pour un système agrégé (12) qui comprend une pluralité de dispositifs intégrés (16), dans lequel un système de gestion de logiciel (14) génère le package d'installation de logiciel (24) en :
recevant des exigences de système (30) pour le système agrégé dans le système de gestion de logiciel (14), les exigences de système (30) comprenant des informations sur les types, les versions, la configuration et/ou l'interconnexion des dispositifs intégrés (16) ;
générant des données de configuration de logiciel (32) à partir des exigences de système (30) sur la base de règles (36) stockées dans le système de gestion de logiciel (14), les règles (36) décrivant quels composants logiciels (34) peuvent être installés dans un dispositif intégré (16) compatible avec les exigences de système (30), et les données de configuration de logiciel (32) décrivant quels composants logiciels (34) doivent être installés dans chaque dispositif intégré (16), les règles (34) comprenant des règles dépendantes d'une combinaison, qui dépendent d'une combinaison de types et/ou de versions des dispositifs intégrés (16), les règles dépendantes d'une combinaison codant quels composants logiciels (34) doivent être installés uniquement dans des combinaisons spécifiques de dispositifs intégrés (16) ;
déterminant quels composants logiciels (34) doivent être mis à jour en comparant les données de configuration de logiciel (32) avec des données de configuration de logiciel historiques (32) qui décrivent quels composants logiciels (34) ont été ajoutés, supprimés et/ou échangés dans les dispositifs intégrés (16) du système agrégé (12) ;
générant le package d'installation de logiciel (24) à partir de composants logiciels (34) stockés dans le système de gestion de logiciel (14) en sélectionnant les composants logiciels (34) à installer dans les dispositifs intégrés (16) sur la base des données de configuration de logiciel (32) et en regroupant ces composants logiciels (34) avec au moins une partie des données de configuration de logiciel (32) sous la forme de données d'installation de logiciel (44), seuls des composants logiciels (34) qui doivent être actualisés étant inclus dans le package d'installation de logiciel (24) ;
dans lequel le système agrégé (12) installe le package d'installation de logiciel (24) en :
recevant le package d'installation de logiciel (24) ;
extrayant les composants logiciels (34) du package d'installation de logiciel (24) ;
extrayant les données d'installation de logiciel (44) du package d'installation de logiciel (24) ;
installant les composants logiciels (34) dans au moins deux dispositifs intégrés (16) du système agrégé (12) sur la base des informations contenues dans les données d'installation de logiciel (44).

2. Procédé selon la revendication 1,
dans lequel les exigences de système (30) comprennent des informations sur les caractéristiques à fournir par le système agrégé (12).

3. Procédé selon la revendication 1 ou 2,
dans lequel un historique des exigences de système (30) et/ou des données de configuration de logiciel (32) est stocké dans le système de gestion de logiciel ; et/ou dans lequel les exigences de système (30) sont déterminées en appliquant les changements du système agrégé (12) aux exigences de système historiques (30).

4. Procédé selon l'une des revendications précédentes,
dans lequel les exigences de système (30) sont basées sur l'interrogation du système agrégé (12) concernant des changements dans sa configuration matérielle.

5. Procédé selon l'une des revendications précédentes,
dans lequel le package d'installation de logiciel (24) et/ou les composants logiciels (34) qu'il contient et/ou les données d'installation de logiciel (44) qu'il contient sont compressés et/ou cryptés.

6. Procédé selon l'une des revendications précédentes, consistant en outre à :
fournir le package d'installation de logiciel (24) pour téléchargement par le système agrégé (12) ; et/ou
fournir le package d'installation de logiciel (24) sur une mémoire non volatile (40, 42) à connecter au système agrégé (12).

7. Procédé selon l'une des revendications précédentes,
dans lequel le package d'installation de logiciel (24) est reçu dans un dispositif d'installation externe (40) connecté en communication à tous les dispositifs intégrés (16) du système agrégé (12), le dispositif d'installation (40) extrayant les composants logiciels (34) et les données d'installation de logiciel (44) et installant les composants logiciels (34) dans les dispositifs intégrés (16) ; ou
dans lequel le package d'installation de logiciel (24) est reçu dans un dispositif intégré maître (16a) faisant partie du système agrégé (12) et est connecté en communication à tous les dispositifs intégrés (16) du système agrégé (12), le dispositif intégré maître (16a) extrayant les composants logiciels (34) et les données d'installation de logiciel (44) et installant les composants logiciels (34) dans les dispositifs intégrés (16).

8. Programme d'ordinateur pour générer et installer un package d'installation de logiciel (24) pour un système agrégé (12) qui, lorsqu'il est exécuté par un processeur, est adapté à mettre en oeuvre les étapes du procédé selon l'une des revendications précédentes.

9. Support lisible par ordinateur, sur lequel est stocké un programme d'ordinateur selon la revendication 8.

10. Système (10) comprenant un système de gestion de logiciel (14) et un système agrégé (12),
dans lequel le système de gestion de logiciel (14) stocke :
des composants logiciels (34) à installer dans différents dispositifs intégrés (16) à installer dans le système agrégé (12), les composants logiciels (34) étant indexés sur la base d'un type de dispositif, d'une version de dispositif et/ou de caractéristiques fournies par un dispositif intégré ;
des règles (36) mettant en relation des composants logiciels (34) avec des exigences de système (30) d'un système agrégé (12), les exigences de système (30) comprenant des informations sur les types, les versions, la configuration et/ou l'interconnexion des dispositifs intégrés (16) d'un système agrégé spécifique (12), et les règles (36) décrivant quels composants logiciels (34) peuvent être installés dans un dispositif intégré (16) compatible avec les exigences de système (30) ;
le système (10) étant adapté à mettre en oeuvre le procédé selon l'une des revendications 1 à 7.

11. Système selon la revendication 10,
dans lequel le système agrégé (12) comprend :
une pluralité de dispositifs intégrés (16) ;
un dispositif intégré maître (16a) connecté en communication avec chaque dispositif intégré (16) de la pluralité de dispositifs intégrés ;
dans lequel le dispositif intégré maître (16a) est adapté à recevoir le package d'installation de logiciel (24) et à installer les composants logiciels (34) contenus dans le package d'installation de logiciel (24) dans les différents dispositifs intégrés (16).

12. Système agrégé selon la revendication 11,
dans lequel le système agrégé (12) comprend en outre des parties mécaniques et/ou électroniques de puissance commandées par les dispositifs intégrés (16).
